# EUROPEAN PATENT APPLICATION

(11) **EP 4 718 191 A1**
(43) Date of publication of application: **01.04.2026**
(21) Application number: 25203749.4
(22) Date of filing: 22.09.2025
(51) Int. Cl.: G05B 19/418

(54) **SYSTEM AND METHOD FOR CONTROLLING AUTOMATIC TRANSIT OF YARN SPINDLE, DEVICE AND STORAGE MEDIUM**

(30) Priority: 29.09.2024 CN 202411371107
(71) Applicant: Zhejiang Hengyi Petrochemical Co., Ltd., Zhejiang 311200 (CN)
(72) Inventor: PENG, Xiantao, Hangzhou, 311200 (CN); QIU, Yibo, Hangzhou, 311200 (CN); JIN, Junliang, Hangzhou, 311200 (CN); LI, Dake, Hangzhou, 311200 (CN); XU, Feng, Hangzhou, 311200 (CN); WU, Xuan, Hangzhou, 311200 (CN); WANG, Dandan, Hangzhou, 311200 (CN)
(74) Representative: Richly & Ritschel Patentanwälte PartG mbB

(57) **Abstract**

Provided are a system and method for controlling automatic transit of a yarn spindle, relating to the field of chemical fiber intelligent technology. The system includes: a MES, a first PLC and second PLCs, the first PLC is configured to acquire second service data of a target workstation from the second PLCs, obtain first service data based on the second service data, and send the first service data to the MES; the MES is configured to determine first transit indication information for the target workstation, and send the first transit indication information to the first PLC; the first PLC is configured to return an analysis result of the first transit indication information to a second PLC corresponding to the target workstation; and the second PLC is configured to control the target workstation to perform a yarn spindle transit task based on the analysis result.

## Description

### TECHNICAL FIELD

The present disclosure relates to the field of chemical fiber intelligent technology, particularly to system and method for controlling automatic transit of a yarn spindle, a device and a storage medium.

### BACKGROUND

In the field of chemical fiber production, an efficient assembly line is the key for ensuring production capacity and efficiency. This production line is densely packed with a plurality of precisely collaborative workstations. Of particular importance is smooth flow of numerous yarn spindles on the assembly line, and their transiting speed is directly related to an overall production rhythm and efficiency, becoming one of bottlenecks that cannot be ignored in improving the production capacity. Therefore, how to achieve rapid transit of the yarn spindles in the assembly line has become an important issue that urgently needs to be overcome in the current innovation of chemical fiber production technology.

### SUMMARY

The present disclosure provides system and method for controlling automatic transit of a yarn spindle, a device and a storage medium.

According to a first aspect of the present disclosure, provided is a method for controlling automatic transit of a yarn spindle, applied to a system for controlling the automatic transit of the yarn spindle, the system for controlling the automatic transit of the yarn spindle includes a manufacturing execution system (MES), a first programmable logic controller (PLC) and a plurality of second PLCs, the plurality of second PLCs each is connected to the first PLC, each of the plurality of second PLCs is connected to at least one workstation, the first PLC is connected to the MES, where,
the first PLC is configured to acquire second service data of a target workstation from the second PLCs, obtain first service data of the target workstation based on the second service data, and send the first service data to the MES in a case where a control button of the first PLC is in an online mode and communication between the first PLC and the MES is normal;
the MES is configured to determine first transit indication information for the target workstation based on the first service data, and send the first transit indication information to the first PLC;
the first PLC is configured to analyze the first transit indication information to obtain an analysis result and return the analysis result to a second PLC corresponding to the target workstation; and
the second PLC corresponding to the target workstation is configured to control the target workstation to perform a yarn spindle transit task based on the analysis result.

According to a second aspect of the present disclosure, provided is a method for controlling automatic transit of a yarn spindle, applied to a system for controlling the automatic transit of the yarn spindle, characterized in that the system for controlling the automatic transit of the yarn spindle includes a MES, a first PLC, and a plurality of second PLCs, the plurality of second PLCs each is connected to the first PLC, each of the plurality of second PLCs is connected to at least one workstation, the first PLC can be connected to the MES, the method for controlling the automatic transit of the yarn spindle includes:
acquiring, by the first PLC, second service data of a target workstation from the second PLCs, in a case where a control button of the first PLC is in an online mode and communication between the first PLC and the MES is normal, sending first service data of the target workstation obtained based on the second service data to the MES, for performing a determining process of an online transit condition based on the first service data and returning first transit indication information to the first PLC by the MES, the first transit indication information is transit permission or transit prohibition;
sending an analysis result with respect to the first transit indication information to a second PLC in a case where the first PLC receives the first transit indication information, for controlling, by the second PLC, the target workstation to perform a yarn spindle transit task based on the analysis result.

According to a third aspect of the present disclosure, provided is an electronic device is provided, which includes:
at least one processor; and
a memory connected in communication with the at least one processor,
where the memory stores an instruction executable by the at least one processor, and the instruction, when executed by the at least one processor, enables the at least one processor to execute the method of any of the embodiments of the present disclosure.

According to a fourth aspect of the present disclosure, provided is a non-transitory computer-readable storage medium storing a computer instruction thereon, where the computer instruction is used to cause a computer to execute the method of any of the embodiments of the present disclosure.

According to the technology of the present disclosure, it is possible to achieve management of automatic transit of the yarn spindle, thereby improving transiting efficiency of the yarn spindle.

It should be understood that the contents described in this summary part are not intended to limit critical or essential features of the embodiments of the present disclosure, nor are they used to limit the scope of the present disclosure. Other features of the present disclosure will be easily understood through the following description.

### BRIEF DESCRIPTION OF THE DRAWINGS

The above and other aspects, advantages and features of various embodiments of the present disclosure will be more apparent by combining the accompanying drawings and referring the following detailed description. In the accompanying drawings, same or similar elements are represented by same or similar reference numerals, in the drawings:
FIG. 1 is a schematic diagram of a system for controlling automatic transit of a yarn spindle according to embodiments of the present disclosure;
FIG. 2 is a schematic diagram of online transit of a system for controlling automatic transit of a yarn spindle according to embodiments of the present disclosure;
FIG. 3 is a schematic diagram of online compulsory transit of a system for controlling automatic transit of a yarn spindle according to embodiments of the present disclosure;
FIG. 4 is a schematic diagram of offline transit of a system for controlling automatic transit of a yarn spindle according to embodiments of the present disclosure;
FIG. 5 is a first flowchart diagram of a method for controlling automatic transit of a yarn spindle according to embodiments of the present disclosure;
FIG. 6 is a second flowchart diagram of a method for controlling automatic transit of a yarn spindle according to embodiments of the present disclosure;
FIG. 7 is a second flowchart diagram of a method for controlling automatic transit of a yarn spindle according to embodiments of the present disclosure;
FIG. 8 is a block diagram of an electronic device for implementing a method for controlling automatic transit of a yarn spindle according to embodiments of the present disclosure.

### DETAILED DESCRIPTION

The following descriptions of exemplary embodiments of the present disclosure are made in combination with the accompanying drawings, includes various details of the embodiments of the present disclosure to facilitate understanding, and should be considered merely exemplary. Therefore, those having skill in the art should recognize that various changes and modifications may be made to the embodiments described herein without departing from the scope of the present disclosure. Meanwhile, for clarity and conciseness, descriptions of well-known functions and structures have been omitted in the following descriptions.

In the descriptions to the embodiments of the present disclosure, terms "first", "second", "third" and the like in the embodiments of the specification and claims of the present disclosure and above drawings are used for distinguishing similar objects and do not necessarily to describe a specific order or sequence. In addition, terms "include" and "have" as well as any variations thereof are intended to cover non-exclusive inclusions, such as containing a series of steps or units. Methods, systems, products, or devices do not necessarily need to be limited to those steps or units clearly listed, but may include other steps or units that are not clearly listed or inherent to these processes, methods, products, or devices.

Before introducing the technical solution of the embodiments of the present disclosure, further explanation will be given on technical terms that may be used in the present disclosure:
MES: a software system used to monitor and manage a manufacturing process, capable of real-time collecting, processing, and analyzing of production data, optimizing production planning and resource allocation.
PLC: an industrial digital computer used to control automation devices, such as a mechanical device, a robot and the like on a production line, capable of performing a logical operation and processing on an input signal according to a preset program, and outputting a control signal to control operations of the devices.
Service data: service-related data generated during the manufacturing process, such as a device status, a product quantity, a production progress, and the like, the data is a basis for MES and PLC to make a decision and control.

Transit indication information, also called transit instruction: instruction and parameter information generated by the MES according to analysis on the service data and used to guide a device to perform a transit task.

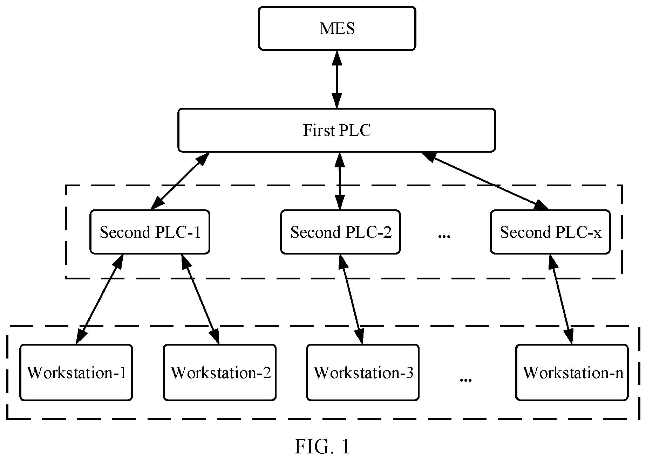

FIG. 1 shows a schematic diagram of a system for controlling automatic transit of a yarn spindle. As shown in FIG. 1, the system for controlling the automatic transit of the yarn spindle includes a MES, a first PLC and a plurality of second PLCs, the plurality of second PLCs each is connected to the first PLC, the first PLC is connected to the MES, each of the plurality of second PLCs is responsible for controlling at least one workstation. Where the second PLCs are mainly responsible for collecting and processing real-time service data (that is second service data) of a target workstation and providing the real-time service data to the first PLC for use. The first PLC is responsible for interacting with the second PLCs and acquiring the second service data from the second PLCs, and is also responsible for interacting with the MES, sending first service data to the MES and receiving first transit indication information issued by the MES based on the first service data, and then notifying the second PLCs to perform the first transit indication information with respect to the target workstations, the first transit indication information is transit permission or transit prohibition.

Herein the first service data is a data set collected and processed by the first PLC and related to a real-time status of the target workstation, a processing progress of the yarn spindle, a quality inspection result of the yarn spindle, a request type and other information. The first service data includes information about status and required operations of all relevant workstations. The data is of great significance for monitoring an operation status of the production line and making a decision on whether to permit transit.

Herein the second service data is a data set collected and processed by the second PLCs and related to the real-time status of the target workstation, the processing progress of the yarn spindle, the quality inspection result of the yarn spindle, a bar code of the yarn spindle and other information. The data is of great significance for monitoring the operation status of the production line. Each of the second PLCs is configured to acquire and store the second service data of the target workstation managed by itself, such as, store the data in a data storage area, for example, data blocks (DBs), allocated by the second PLC for the target workstation managed by itself.

Herein the MES may communicate with the first PLC through a network or another communication manner such as a management interface (MI).

Main types of the yarn spindle involved in the solution of the embodiments of the present disclosure may include one or more of partially oriented yarns (POYs), fully drawn yarns (FDYs), draw textured yarns (DTYs, or referred as low elasticity yarns) and the like. For example, specific types of yarns may include polyester partially oriented yarns, polyester fully drawn yarns, polyester drawn yarns, polyester draw textured yarns, polyester staple fiber (PSF) and the like.

The system for controlling the automatic transit of the yarn spindle according to the embodiments of the present disclosure enables the MES to monitor a status of each workstation in real-time and make adjustment and optimization as needed through real-time communication and data processing between the MES, the first PLC, and the second PLCs. Through the above automation control, manual intervention has been reduced, and efficiency and accuracy of transit of the yarn spindle have been improved, material waste and downtime caused by human error are reduced, and production costs is lowered. Through the above automation control, stability and consistency of the yarn spindle during a transit process are ensured, which helps to improve an overall production rhythm and efficiency. By using the first PLC as an intermediate layer between the MES and the plurality of second PLCs, the system for controlling the automatic transit of the yarn spindle has significant advantages in centralizing management, integrating data, reducing burden on the MES, enhancing system scalability, improving safety and stability, and simplifying a network structure.

If the MES directly communicates with the plurality second PLCs, it will need to process a large amount of real-time data and requests, which may increase the burden on the MES and affect its performance. By using the first PLC as the intermediate layer, the MES only needs to communicate with the first PLC, thereby reducing its processing burden. Without the first PLC as the intermediate layer, the MES needs to establish a direct communication connection with each second PLC, which may make a network structure complex and difficult to manage. By using the first PLC for relay, the network structure may be greatly simplified, making an entire communication process clearer and more orderly. The first PLC may serve as a safety barrier to verify and filter data from the second PLCs, preventing malicious or erroneous data from entering into the MES. Meanwhile, a redundancy and fault tolerance mechanism of the first PLC may improve stability and reliability of the system, ensuring that the production line can still operate normally in an event of some device failures.

With expansion and upgrade of the production line, it may be necessary to add more second PLCs. If the MES directly communicates with each second PLC, then each time of expansion requires corresponding configuration and modification of the MES. By using the first PLC as the intermediate layer, it is only necessary to add support for new second PLCs in the first PLC, without modifying the configuration of the MES. The first PLC can receive service data from the plurality of second PLCs in a centralized manner, and perform unified processing and analysis, this manner makes control of the entire production line more centralized and orderly, reducing complexity and confusion of direct communication between the MES and the plurality of second PLCs. The first PLC can integrate data from different second PLCs to form a more comprehensive production view, which enables the MES to make a decision based on more comprehensive data, thereby optimizing a production plan and resource allocation. Meanwhile, the first PLC may also preprocess and filter data, reducing an amount of data transmitted to the MES and improving communication efficiency.

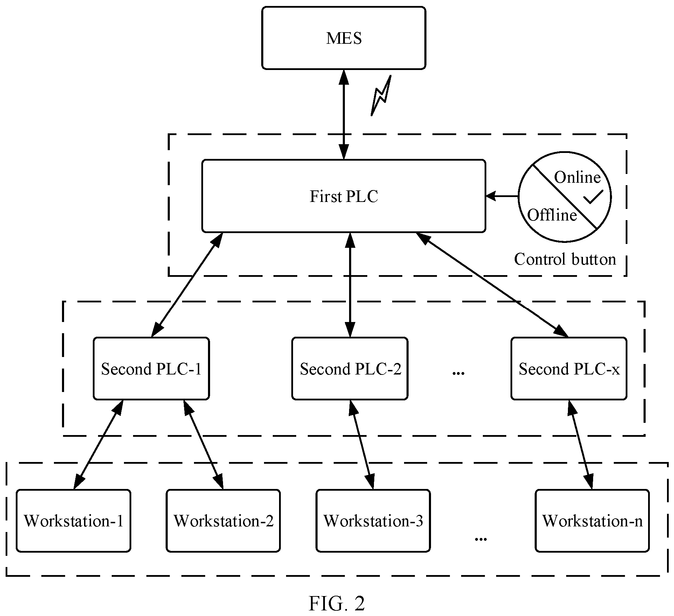

FIG. 2 is a schematic diagram of online transit of a system for controlling automatic transit of a yarn spindle according to embodiments of the present disclosure, as shown in FIG. 2, the first PLC is configured to acquire the second service data of the target workstation from the second PLCs, obtain the first service data of the target workstation based on the second service data, and send the first service data to the MES in a case where a control button of the first PLC is in an online mode and communication between the first PLC and the MES is normal; the MES is configured to determine first transit indication information for the target workstation based on the first service data, and send the first transit indication information to the first PLC; the first PLC is configured to analyze the first transit indication information to obtain an analysis result and return the analysis result to a second PLC corresponding to the target workstation; the second PLC corresponding to the target workstation is configured to control the target workstation to perform a yarn spindle transit task based on the analysis result.

In some embodiments, the control button is a physical switch or knob configured to control an operation mode of the first PLC, and is configured to switch the operation mode of the first PLC (such as the online mode or an offline mode). The offline mode is a specific position or mark on the control button, and when the button is rotated to this position, it indicates that the offline mode is selected and is configured to actively interrupt the communication with the MES. The online mode is a specific position or mark on the control button, and when the button is rotated to this position, it indicates that the online mode is selected and is configured to maintain the communication with the MES.

In some embodiments, the first PLC is specifically configured to convert the second service data into the first service data in a preset data storage format according to the data storage format, where the first service data is stored in a data storage area allocated by the first PLC for the target workstation, and different types of variables in the first service data correspond to different fixed addresses in the data storage area.

The online transit solution according to the embodiments of the present disclosure enables the MES to monitor the status of each workstation in real-time and make adjustment and optimization as needed through real-time communication and data processing among the MES, the first PLC, and the second PLCs in the case where the control button of the first PLC is in the online mode and the communication between the first PLC and the MES is normal, thereby achieving management of automatic transit of the yarn spindle. Through automatic control of transit of the yarn spindle, manual intervention has been reduced, and efficiency and accuracy of the transit of the yarn spindle have been improved, and production costs is lowered. The automatic control of the transit of the yarn spindle ensures stability and consistency of the yarn spindle during the transit process, which helps to improve an overall production rhythm and efficiency.

In some embodiments, the second PLC corresponding to the target workstation is configured to:
notify a transit device or directly control the transit device to transfer the yarn spindle which has been processed by the target workstation to a next workstation of the target workstation in a case where the analysis result is the transit permission; and
notify the transit device and directly control the transit device to prohibit the target workstation to perform the yarn spindle transit task and resend the second service data with respect to the target workstation in a case where the analysis result is the transit prohibition.

Herein the transit device refers to an automated device used on the production line to transfer materials (such as the yarn spindle) between different workstations, such as a conveyor belt, a robotic arm, an automatic handling cart, and the like, which are only an illustrative example and are not intended to limit all possible devices included in the transit device, but is not exhaustive here.

In this way, the first PLC and the plurality of second PLCs can accurately control the transit process of the yarn spindle, reduce waiting time and manual intervention, and improve an overall efficiency of the production line, thereby reducing errors caused by human factors and improving stability and reliability of the production process. PLCs may be flexibly programed, and can quickly adjust control logic according to production needs, adapt to processing on yarn spindles of different types and specifications, not only significantly shorten stay time of the yarn spindle at the workstation, improve overall smoothness of the production line, but also effectively reduce energy consumption and labor costs.

In some embodiments, the MES is specifically configured to:
analyze the first service data to acquire target string data corresponding to the target workstation;
determining whether the yarn spindle of the target workstation satisfies a transit condition based on target string data; determining the first transit indication information as the transit permission if the transit condition is satisfied; and determining the first transit indication information as the transit prohibition if the transit condition is not satisfied.

In some implementations, the first transit indication information is used to indicates information of whether the yarn spindle on the production line may be transferred to the next workstation for processing. Depending on a determining result of the transit condition, the first transit indication information may be the transit permission or the transit prohibition.

In some implementations, the MES first receives the first service data sent from the first PLC. The data usually includes the status information of the target workstation on the production line, the processing progress of the yarn spindle, the quality inspection result, times of requesting transit and the like. There is a dedicated data analyzing module set up within the MES to analyze the received first service data and extract the target string data corresponding to the target workstation. The target string data may be encoded to represent a specific working status or attribute. Based on the analyzed target string data, the MES further compares and analyzes it with a preset transit condition. The transit condition may include whether a processing quality of the yarn spindle satisfies a standard, whether all processing tasks at the current workstation have been completed, whether there are device failures or production abnormalities, or the like. If the yarn spindle at the target workstation satisfies all preset transit conditions, the MES determines that the transit indication information is the "transit permission", indicating that the yarn spindle may be safely transferred to the next workstation for further processing. If the yarn spindle at the target workstation does not satisfy any transit condition, the MES determines the transit indication information as the "transit prohibition" and may trigger a corresponding alarm mechanism to notify on-site personnel for inspection and handling. The MES takes the determining result (the transit permission or the transit prohibition) as the first transit indication information and sends it to the second PLC or other relevant devices through a communication interface. These transit devices execute corresponding control logic based on the received transit indication information, such as starting or stopping a transfer action of the yarn spindle.

Taking an automatic packaging line in a chemical fiber industry as an example, when the first PLC detects that yarn spindle processing at a certain workstation (such as a weighing workstation) is completed, it will send the first service data containing status information of this workstation to the MES. After receiving the data, the MES first analyzes the target string data (such as a QR code and weight information of the yarn spindle requested for transit), and then compares it with the preset transit condition (such as whether a weight of the yarn spindle of this specification is within an allowable range, which includes A level: within the allowable range, B level: light weight, C level: heavy weight). If a quality level of the yarn spindle is the A level, the MES will determine that the transit indication information is the "transit permission" and notify the second PLC to initiate a transfer action of the yarn spindle; and if the quality level of the yarn spindle is the B lever or the C level, it is determined as the "transit prohibition" and triggers an alarm mechanism.

In this way, through the MES's analysis of the first service data and precise determination of the transit condition, it can ensure that only the yarn spindle that satisfy requirements can continue to be transferred, thereby improving accuracy and reliability of production. Timely detection and prevention of a yarn spindle that does not satisfy the transit condition may reduce abnormal situations in the production process, such as device failures, quality issues, and the like, thereby reducing production risks. By automatically determining and indicating of the transit information, manual intervention and waiting time may be reduced, and an overall operational efficiency of the production line may be improved.

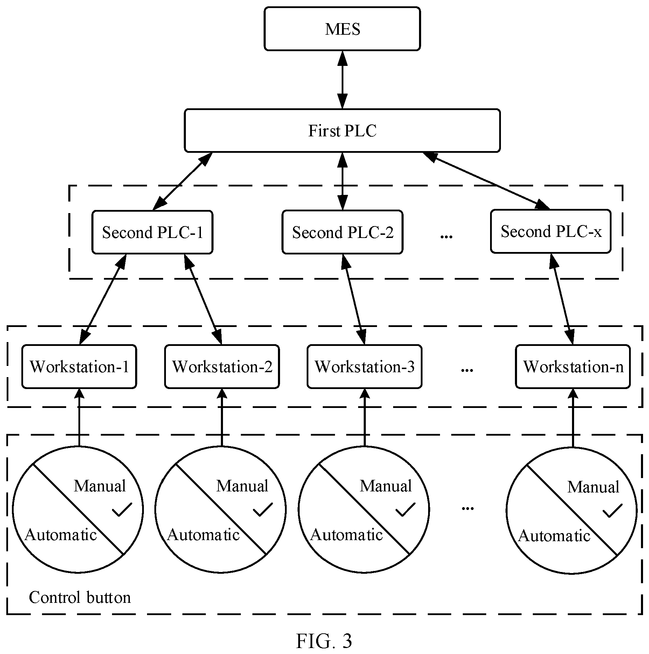

FIG. 3 is a schematic diagram of online compulsory transit of a system for controlling automatic transit of a yarn spindle according to embodiments of the present disclosure, as shown in FIG. 3, the second PLC is further configured to record a compulsory transit variable being equal to 1 in the second service data in a case where it detects that a control button corresponding to the target workstation is switched to a manual mode, where the compulsory transit variable being equal to 1 represents that the target workstation requests compulsory transit; the first PLC is further configured to record the compulsory transit variable being equal to 1 in the first service data corresponding to the target workstation in the case where the control button of the first PLC is in the online mode and the communication between the first PLC and the MES is normal; the MES is further configured to determine second transit indication information for the target workstation based on the compulsory transit variable if it detects that the first service data includes the compulsory transit variable being equal to 1, where the second transit indication information is the transit permission; the first PLC is further configured to send an analysis result with respect to the second transit indication information to the second PLC in a case where the first PLC receives the second transit indication information, for controlling the target workstation to perform the yarn spindle transit task based on the analysis result by the second PLC.

Herein the control button is a physical switch or knob used to manually control a status of a device or system, which is used to switch an operation mode of the target workstation (such as automatic or manual). The manual mode is a specific position or mark on the control button. When the button is rotated to this position, it indicates that a manual control mode for triggering the compulsory transit request is selected. The control button corresponding to the target workstation is switched to a position of the manual mode to set the compulsory transit variable to 1, where the compulsory transit variable being equal to 1 represents that the target workstation requests the compulsory transit.

Assuming that on an automated production line, a notification to increase production is received unexpectedly, an operator switches the control button from an automatic mode to the manual mode in order to complete the task on time. At this point, the second PLC detects this situation and sends the second service data including the compulsory transit variable being equal to 1 to the first PLC. After processing, the first PLC sends the first service data containing the same compulsory transit variable to the MES. After receiving the data, the MES immediately analyzes and checks a value of the compulsory transit variable, and quickly generates indication information of the "transit permission" after determining that the value of the compulsory transit variable is 1, and sends it to the first PLC. The first PLC then transfers this information to the second PLC, which ultimately controls the target workstation to directly execute the transit task.

The online compulsory transit solution according to the embodiments of the present disclosure can achieve management of automatic, online and compulsory transit of the yarn spindle, thereby improving transiting efficiency of the yarn spindle. By introducing the control button for the target workstation, the operator is allowed to directly intervene in the production process in a specific situation, thereby improving flexibility of the system and its ability to respond to an emergency. When it is necessary to urgently skip a workstation, the operator may quickly trigger the compulsory transit request by rotating the control button, and the system can respond quickly and execute a corresponding control logic. In addition, during a device failure or a maintenance period, partial bypassing of the production line may be achieved through manual control, thereby reducing overall downtime and improving production efficiency.

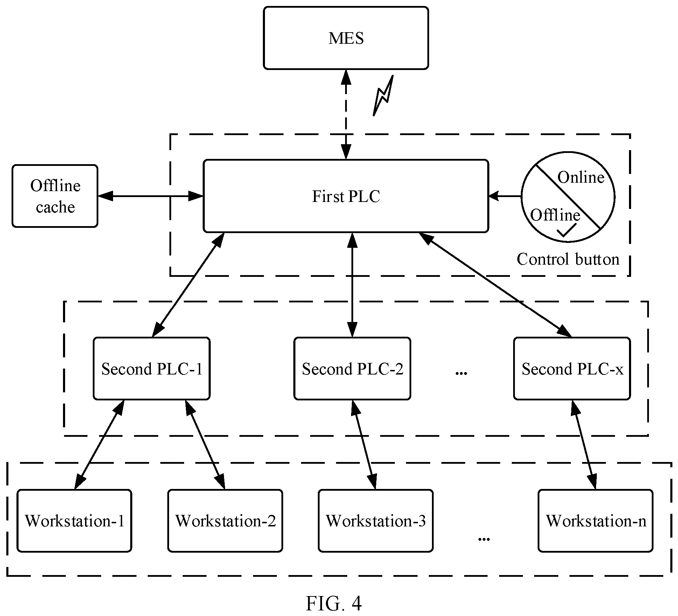

FIG. 4 is a schematic diagram of offline transit of a system for controlling automatic transit of a yarn spindle according to embodiments of the present disclosure, as shown in FIG. 4, the first PLC is further configured to acquire the second service data of the target workstation from the second PLC in a case where the control button of the first PLC is in the offline mode or the communication between the first PLC and the MES is interrupted, obtain the first service data of the target workstation based on the second service data, record the first service data, directly generate third transit indication information for the target workstation, and send the third transit indication information to the second PLC, for controlling the target workstation to perform the yarn spindle transit task based on the third transit indication information by the second PLC, the third transit indication information is the transit permission.

In some implementations, the first PLC may continuously monitor a status of the control button directly connected to itself, the button is usually installed on a control panel and allow the operator to manually switch the operation mode of the first PLC. When the control button is detected to be rotated to a position of the "offline mode", the first PLC immediately records this event and considers that connection with the MES has been disconnected or is about to be disconnected. It should be noted that this detection manner mainly relies on a hardware signal (such as on/off status of the button), so it is real-time and reliable. After being determined to be in the offline mode, the first PLC will acquire the second service data of the target workstation from the second PLC according to an established process and convert it into the first service data. Based on the processed first service data, the first PLC will decide whether to send transit indication information to the second PLC to control the yarn spindle transit task. Generally speaking, the first PLC will send the transit indication information of the "transit permission" to the second PLC. The system should have an ability to handle various abnormal situations and automatically synchronize data or restore the connection with MES when a condition is restored.

Taking the automatic packaging line in the chemical fiber industry as an example, the MES is temporarily unable to communicate with the first PLC due to network failures. At this point, the operator may walk to the control panel where the first PLC is located and rotate the control button to the "offline mode". After the first PLC detects this change, it will automatically determine that the connection with MES has been disconnected and immediately start the transit control process in the offline mode. Subsequently, the first PLC will send the transit indication information of the "transit permission" to the second PLC to ensure that the yarn spindle can smoothly move from the current workstation to the next workstation.

The offline transit solution according to the embodiments of the present disclosure can achieve management of automatic, offline and compulsory transit of the yarn spindle and automatic caching of offline transit records. By introducing the control button for the first PLC, the operator is allowed to directly intervene in the production process in a specific situation, thereby improving flexibility of the system and its ability to respond to an emergency. By allowing the operator to manually switch the operation mode of the first PLC, the system can quickly adjust the operation status according to actual needs, thereby enhancing the flexibility and adaptability of the system. Status detection of the control button provides a visual indication of connection status between the first PLC and the MES, which helps to detect and handle a connection problem in a timely manner, thereby improving reliability of the system. In a case where the MES is unavailable, the operator can switch the first PLC to the offline mode by simply rotating the control button, allowing the system to continue executing the transit task, simplifying the operation process and reducing downtime.

In some embodiments, the first PLC is further configured to: generate offline data based on the first service data in the case where the control button of the first PLC is in the offline mode or the communication between the first PLC and the MES is interrupted, where the offline data includes a transit record which needs to be synchronized to the MES; synchronize the offline data to the MES in a case where the control button of the first PLC is switched from the offline mode to the online mode and the communication between the first PLC and the MES is restored.

Herein, different from the first service data, the offline data does not directly come from real-time data conversion of a production field, but refers to data that needs to be recorded during communication interruption between the first PLC and the MES for subsequent synchronizing to the MES. The data may include various production records, events, status changes, and the like. In the case where the communication between the first PLC and the MES is interrupted, in order to maintain data continuity and integrity, it is necessary to store the data in an offline cache area. A main purpose of the offline data is to synchronize the data to the MES after the network is restored or the connection with the MES is re-establised, to ensure that the data in the MES is up-to-date and can reflect a real situation of the production field. This is crucial for production management, data analysis, report generation, and the like.

Assuming that yarn spindle packaging is automatically controlled by the first PLC and the second PLC, the first PLC interacts with the MES in real-time for production data. One day, due to a network failure, the communication between the first PLC and the MES is interrupted, and critical data such as the transit record generated during this period is stored in the offline cache area of the first PLC. After the network failure is resolved, the first PLC detects that the control button has switched from the offline mode to the online mode and the communication with MES has been restored, at this point, the first PLC automatically starts a data synchronization program to synchronize the transit record and other data in the offline cache area to the MES, ensuring integrity and real-time performance of the production data.

The synchronizing offline data solution according to the embodiments of the present disclosure can management of automatic synchronization of offline transit record of the yarn spindle, thereby improving transiting efficiency of the yarn spindle. By using an offline caching mechanism to record the offline data, even in the case where the communication between the first PLC and the MES is interrupted, temporary storage and subsequent synchronization of important data can be ensured, thereby improving efficiency and reliability of data synchronization. In a case where the control button of the first PLC is switched from the offline mode to the online mode and the communication between the first PLC and the MES is restored, if the offline data is detected stored in the offline cache area, it will be synchronized to the MES to ensure that critical data in the production process can be synchronized to the MES system in a timely manner, which helps a management to grasp a production status in real time and respond quickly. Through the offline caching mechanism, integrity and traceability of the critical data can be ensured even in a case where the communication is interrupted, thereby avoiding an impact of data loss on production. Through an automatic synchronization mechanism, a communication failure can be detected and resolved in a timely manner, improving stability and reliability of the system.

In some implementations, the first PLC allocates a plurality of offline cache areas and one offline control area to all target workstations, the plurality of offline cache areas is shared by all target workstations. The offline control area includes a relevant data bit and a relevant control bit for synchronizing the offline data with the MES.

Herein the offline cache areas are specific areas divided in the first PLC or another storage device, used to store data to be synchronized when the communication between the first PLC and the MES is interrupted.

Herein the offline control area is a dedicated area set up in the second PLC, which includes the relevant data bit and the control bit for controlling a synchronization process of the offline data.

In some implementations, the first PLC allocates a plurality of shared offline cache areas to all target workstations. These areas are used to store the offline data generated by each workstation during the communication between the PLC and the MES is interrupted, such as the transit record, a production parameter and the like.

In some implementations, when the communication between the first PLC and the MES is interrupted, the offline data generated by each target workstation will be automatically stored in the shared offline cache areas. At the same time, the relevant data bit and the control bit in the offline control area will be updated to reflect a current synchronization status and a priority. Once the communication between the first PLC and the MES is restored, the first PLC will check status information in the offline control area and determine which offline data needs to be synchronized to the MES based on the priority and a synchronization strategy. Then, the first PLC will send the offline data from the cache areas to the MES according to predetermined format and protocol. After receiving the offline data, the MES will perform verification and confirmation. Once the data is successfully received and processed, the MES will send a synchronization confirmation signal to the first PLC. After receiving the confirmation signal, the first PLC will update the status information in the offline control area and clear the synchronized offline data to free up cache space for future use.

In this way, by allocating the shared offline cache areas for all target workstations, it can ensure that the critical data generated during communication interruption is properly stored, avoiding the impact of data loss on production. Setting of the offline control area enables the PLC to flexibly control the synchronization process of the offline data, including a synchronization priority, a target MES address, and the like, to satisfy needs of different production scenarios. Once the communication is restored, the first PLC can quickly synchronize the offline data to the MES, ensuring that the management can grasp the production status in real time and respond quickly, thereby improving production efficiency. Through synchronization confirmation and cleaning mechanism, it can be ensured that the synchronized offline data is promptly deleted from the cache areas, avoiding occupying excessive storage space resources.

It should be understood that the schematic diagrams shown in FIGS. 1, 2, 3, and 4 are only exemplary and not limiting, and are extensible. Those having skills in the art can make various obvious changes and/or substitutions based on the examples of FIGS. 1, 2, 3, and 4, and the resulting technical solutions still fall within the scope of the embodiments of the present disclosure.

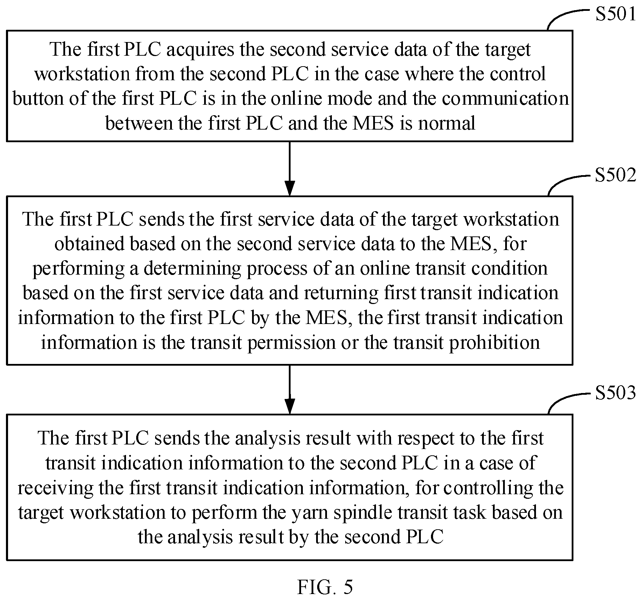

The embodiments of the present disclosure provide a method for controlling automatic transit of a yarn spindle, FIG. 5 is a flowchart diagram of the method for controlling the automatic transit of the yarn spindle according to the embodiments of the present disclosure. The method for controlling the automatic transit of the yarn spindle may be applied to an apparatus for controlling the automatic transit of the yarn spindle, which is located on an electronic device. The electronic device is applied to the system for controlling the automatic transit of the yarn spindle. The electronic device includes but is not limited to a fixed device and/or a mobile device. For example, the fixed device includes but is not limited to a server, which may be a cloud server or a regular server. For example, the mobile device includes but is not limited to a mobile phone, a tablet, a laptop, or the like. In some possible implementations, the method for controlling the automatic transit of the yarn spindle may also be achieved by a processor calling a computer readable instruction stored in a memory. As shown in FIG. 5, the method for controlling the automatic transit of the yarn spindle includes following steps.

In S501, the first PLC acquires the second service data of the target workstation from the second PLC in the case where the control button of the first PLC is in the online mode and the communication between the first PLC and the MES is normal;

In S502, the first PLC sends the first service data of the target workstation obtained based on the second service data to the MES, for performing a determining process of an online transit condition based on the first service data and returning first transit indication information to the first PLC by the MES, the first transit indication information is the transit permission or the transit prohibition.

In S503, the first PLC sends the analysis result with respect to the first transit indication information to the second PLC in a case of receiving the first transit indication information, for controlling the target workstation to perform the yarn spindle transit task based on the analysis result by the second PLC.

In some implementations, the determining process of the online transit condition includes:
determining whether the yarn spindle of the target workstation satisfies the transit condition based on the target string data corresponding to the target workstation; determining the first transit indication information is the transit permission if the transit condition is satisfied; and determining the first transit indication information is the transit prohibition if the transit condition is not satisfied, the target string data is obtained by analyzing the first service data by the MES.

In this way, in the case where the control button of the first PLC is in the online mode and the communication between the first PLC and the MES is normal, the MES is enabled to monitor the status of each workstation in real-time and make adjustment and optimization as needed through real-time communication and data processing among the MES, the first PLC, and the second PLCs, thereby achieving management of the automatic transit of the yarn spindle. Through automatic control of the transit of the yarn spindle, manual intervention has been reduced, and efficiency and accuracy of the transit of the yarn spindle have been improved, and production costs is lowered. The automatic control of the transit of the yarn spindle ensures stability and consistency of the yarn spindle during the transit process, which helps to improve an overall production rhythm and efficiency.

In the embodiments of the present disclosure, the method for controlling the automatic transit of the yarn spindle may further include: the second PLC notifies a transit control device to output an abnormal transit alarm in a case where the analysis result if the transit prohibition.

In some implementations, the abnormal transit alarm includes, but is not limited to, issuing a warning signal to on-site personnel through a sound and light alarm, a display screen and another apparatus, to indicate existence of an abnormal situation that needs to be handled.

In some implementations, once the analysis result is the transit prohibition, the second PLC will immediately recognize the existence of the abnormal situation and prepare to trigger a corresponding alarm mechanism. The second PLC sends an instruction to the transit device through the communication interface, clearly instructing it to prohibit execution of the yarn spindle transit task at the current target workstation. At the same time, the second PLC will also send an additional signal or command to the transit device, instructing it to activate an abnormal transit alarm function.

In some implementations, outputting the abnormal transit alarm includes: after receiving an alarm instruction, the transit device will immediately activate an alarm apparatus (such as the sound and light alarm, the display screen, and the like). The alarm apparatus will emit an obvious sound and light signal to attract attention of the on-site personnel and display or broadcast specific alarm information (such as "abnormal transit of the yarn spindle, please check").

In some implementations, the second PLC will record relevant information about the current abnormal transit event, including time of occurrence, the target workstation, an anomaly cause, and the like, for subsequent analysis and traceability.

Taking the automatic packaging line in the chemical fiber industry as an example, when a yarn spindle at a certain workstation (such as a first bagging workstation) is determined as the "transit prohibited" due to a bagging failure, the second PLC will immediately notify the transit device or directly control the transit device to stop the transfer of the yarn spindle, and at the same time, trigger the abnormal transit alarm. At this time, the sound and light alarm on the production line will emit a piercing alarm sound and flashing red light, while the display screen will show a prompt message of "abnormal transit of the yarn spindle on the first bagging workstation, please check". After seeing the alarm, the on-site personnel will immediately go to the first bagging workstation to check the problem and take a corresponding measure to solve the abnormality. In this way, by timely outputting the abnormal transit alarm, it can quickly attract the attention of on-site personnel, shorten time for detecting and resolving the problem, avoid a production accident or a quality problem that may be caused by continued transfer of unqualified yarn spindle, and improve overall safety of the production line. By quickly resolving an abnormal transit issue, downtime of the production line can be reduced, and production efficiency and capacity can be improved.

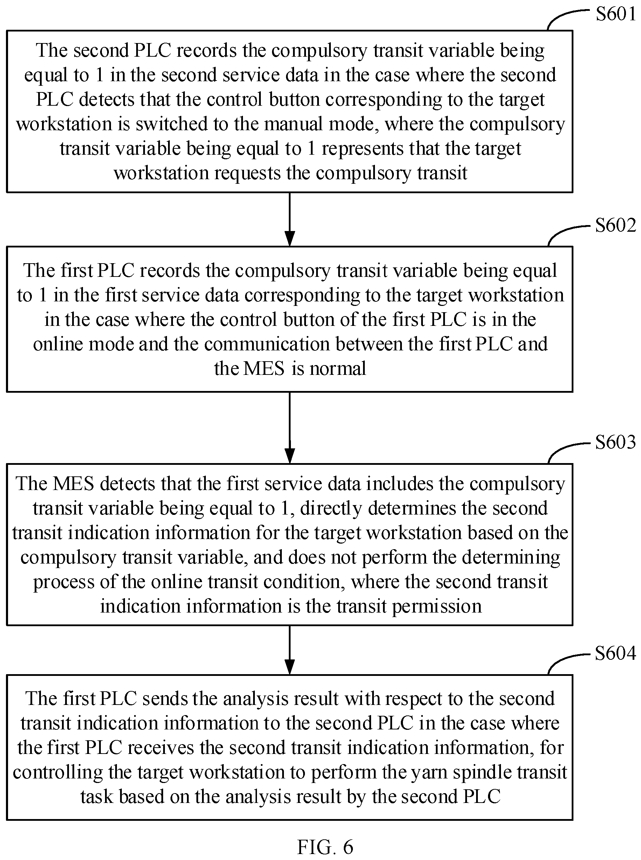

The embodiments of the present disclosure provide a method for controlling automatic transit of a yarn spindle, FIG. 6 is a flowchart diagram of the method for controlling the automatic transit of the yarn spindle according to the embodiments of the present disclosure. The method for controlling the automatic transit of the yarn spindle may be applied to an apparatus for controlling the automatic transit of the yarn spindle, which is located on an electronic device. The electronic device is applied to the system for controlling the automatic transit of the yarn spindle. The electronic device includes but is not limited to a fixed device and/or a mobile device. For example, the fixed device includes but is not limited to a server, which may be a cloud server or a regular server. For example, the mobile device includes but is not limited to a mobile phone, a tablet, a laptop, or the like. In some possible implementations, the method for controlling the automatic transit of the yarn spindle may also be achieved by a processor calling a computer readable instruction stored in a memory. As shown in FIG. 6, the method for controlling the automatic transit of the yarn spindle includes following steps.
In S601, the second PLC records the compulsory transit variable being equal to 1 in the second service data in the case where the second PLC detects that the control button corresponding to the target workstation is switched to the manual mode, where the compulsory transit variable being equal to 1 represents that the target workstation requests the compulsory transit.
In S602, the first PLC records the compulsory transit variable being equal to 1 in the first service data corresponding to the target workstation in the case where the control button of the first PLC is in the online mode and the communication between the first PLC and the MES is normal;
In S603, the MES detects that the first service data includes the compulsory transit variable being equal to 1, directly determines the second transit indication information for the target workstation based on the compulsory transit variable, and does not perform the determining process of the online transit condition, where the second transit indication information is the transit permission;
In S604, the first PLC sends the analysis result with respect to the second transit indication information to the second PLC in the case where the first PLC receives the second transit indication information, for controlling the target workstation to perform the yarn spindle transit task based on the analysis result by the second PLC.

In some implementations, the determining process of the online transit condition is same as that described above and is not repeated herein.

In this way, the management of automatic, online and compulsory transit of the yarn spindle can be achieved, thereby improving transiting efficiency of the yarn spindle. By introducing the control button for the target workstation, the operator is allowed to directly intervene in the production process in a specific situation, thereby improving flexibility of the system and its ability to respond to an emergency. When it is necessary to urgently skip a workstation, the operator may quickly trigger the compulsory transit request by rotating the control button, and the system can respond quickly and execute a corresponding control logic. In addition, during a device failure or a maintenance period, partial bypassing of the production line may be achieved through manual control, thereby reducing overall downtime and improving production efficiency.

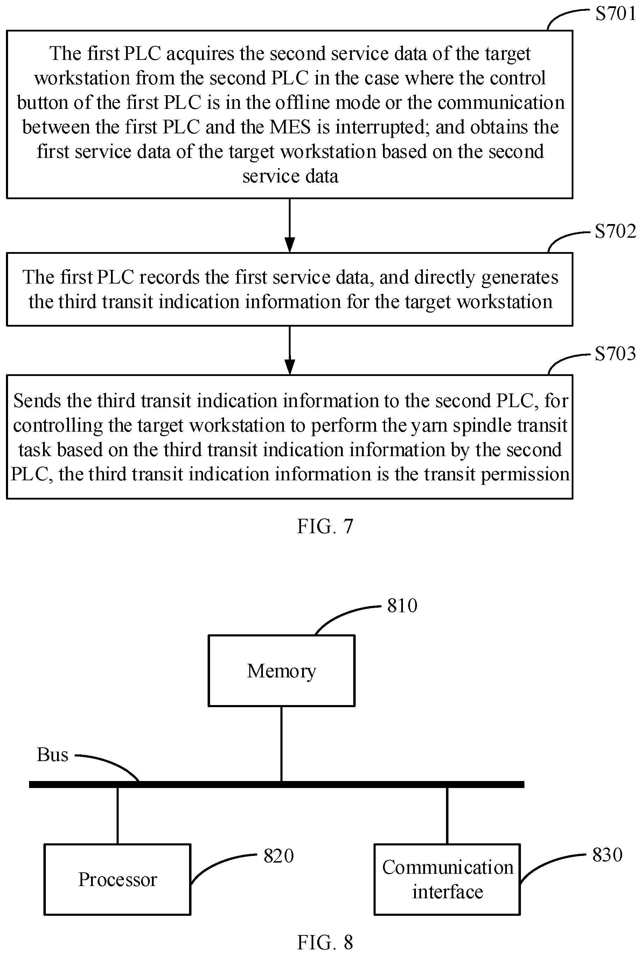

The embodiments of the present disclosure provide a method for controlling automatic transit of a yarn spindle, FIG. 7 is a flowchart diagram of the method for controlling the automatic transit of the yarn spindle according to the embodiments of the present disclosure. The method for controlling the automatic transit of the yarn spindle may be applied to an apparatus for controlling the automatic transit of the yarn spindle, which is located on an electronic device. The electronic device is applied to the system for controlling the automatic transit of the yarn spindle. The electronic device includes but is not limited to a fixed device and/or a mobile device. For example, the fixed device includes but is not limited to a server, which may be a cloud server or a regular server. For example, the mobile device includes but is not limited to a mobile phone, a tablet, a laptop, or the like. In some possible implementations, the method for controlling the automatic transit of the yarn spindle may also be achieved by a processor calling a computer readable instruction stored in a memory. As shown in FIG. 7, the method for controlling the automatic transit of the yarn spindle includes following steps.
In S701, the first PLC acquires the second service data of the target workstation from the second PLC in the case where the control button of the first PLC is in the offline mode or the communication between the first PLC and the MES is interrupted; and obtains the first service data of the target workstation based on the second service data;
In S702, the first PLC records the first service data, and directly generates the third transit indication information for the target workstation;
In S703, the first PLC sends the third transit indication information to the second PLC, for controlling the target workstation to perform the yarn spindle transit task based on the third transit indication information by the second PLC, the third transit indication information is the transit permission.

In this way, management of automatic, offline and compulsory transit of the yarn spindle and automatic caching of offline transit records can be achieved. By introducing the control button for the first PLC, the operator is allowed to directly intervene in the production process in a specific situation, thereby improving flexibility of the system and its ability to respond to an emergency. By allowing the operator to manually switch the operation mode of the first PLC, the system can quickly adjust the operation status according to actual needs, thereby enhancing the flexibility and adaptability of the system. The status detection of the control button provides the visual indication of the connection status between the first PLC and the MES, which helps to detect and handle the connection problem in a timely manner, thereby improving reliability of the system. In the case where the MES is unavailable, the operator can switch the first PLC to the offline mode by simply rotating the control button, allowing the system to continue executing the transit task, in the offline mode of the first PLC, the transit indication information can be still generated for the target workstation, thereby simplifying the operation process and reducing downtime. Ensuring data integrity through the offline caching mechanism reduces production interruption caused by a data synchronization issue.

In some embodiments, the method for controlling the automatic transit of the yarn spindle may further include:
generate the offline data based on the first service data by the first PLC, in the case where the control button of the first PLC is in the offline mode or the communication between the first PLC and the MES is interrupted, where the offline data includes the transit record which needs to be synchronized to the MES;
synchronize the offline data to the MES in the case where the control button of the first PLC is switched from the offline mode to the online mode and the communication between the first PLC and the MES is restored.

Herein the first service data is converted by the first PLC from the second service data obtained from the second PLC corresponding to the target workstation. The second service data usually include real-time production status, parameters, results, and other information of the target workstation. In the case where the connection between the first PLC and the MES is interrupted, the first PLC will record the first service data converted from the second PLC. The first service data is mainly used to support the production control of the target workstation, such as a task of controlling the transit of the yarn spindle. It reflects the operation status of the target workstation in real-time or near real-time.

Herein, different from the first service data, the offline data does not directly come from real-time data conversion of a production field, but refers to data that needs to be recorded during communication interruption between the first PLC and the MES for subsequent synchronizing to the MES. The data may include various production records, events, status changes, and the like.

In this way, management of automatic synchronization of offline transit record of the yarn spindle can be achieved, thereby improving transiting efficiency of the yarn spindle. By using the offline caching mechanism to record the offline data, even in the case where the communication between the first PLC and the MES is interrupted, temporary storage and subsequent synchronization of important data can be ensured, thereby improving efficiency and reliability of data synchronization. In the case where the control button of the first PLC is switched from the offline mode to the online mode and the communication between the first PLC and the MES is restored, if the offline data is detected stored in the offline cache area, it will be synchronized to the MES to ensure that the critical data in the production process can be synchronized to the MES system in a timely manner, which helps a management to grasp a production status in real time and respond quickly. Through the offline caching mechanism, integrity and traceability of the critical data can be ensured even in a case where the communication is interrupted, thereby avoiding an impact of data loss on production.

According to embodiments of the present disclosure, the present further provides an electronic device and a readable storage medium.

FIG. 8 is a structural block diagram of an electronic device according to the embodiments of the present application. As shown in FIG. 8, the electronic device includes a memory 810 and a processor 820, a computer program capable of being run on the processer 820 is stored in the memory 810. The number of each of the memory 810 and processor 820 may be one or more. The memory 810 may store one or more computer programs, which, when the one or more computer programs are executed by the electronic device, cause the electronic device performs the method provided in the above method embodiments. The electronic device may also include a communication interface 830 configured to communicate with an external device for carrying out data interactive transmission.

If the memory 810, the processor 820 and the communication interface 830 are implemented independently, the memory 810, the processor 820 and the communication interface 830 may be connected to each other and complete communication with each other through a bus. The bus may be an Industry Standard Architecture (ISA) bus, a Peripheral Component Interconnect (PCI) bus, an Extended Industry Standard Architecture (EISA) bus or the like. The bus may be divided into an address bus, a data bus, a control bus and the like. For ease of representation, the bus is shown by only one thick line in FIG. 8, which does not mean that there is only one bus or one type of bus.

Alternatively, in specific implementation, if the memory 810, the processor 820 and the communication interface 830 are integrated on one chip, the memory 810, the processor 820 and the communication interface 830 may complete communication with each other through internal interfaces.

It should be understood that the above processor may be a central processing unit (CPU), or may be another general-purpose processor, a digital signal processing (DSP), an application specific integrated circuit (ASIC), a field programmable gate array (FPGA) or another programmable logic device, a discrete gate or a transistor logic device, a discrete hardware component, or the like. The general-purpose processor may be a microprocessor or any conventional processor, etc. It is worth noting that the processor may be a processor that supports the Advanced RISC Machines (ARM) architecture.

Furthermore, alternatively, the above memory may include a read-only memory and a random-access memory, and may also include a non-volatile random access memory. The memory may be either a volatile memory or a non-volatile memory, or it may include both the volatile and non-volatile memories. Where the non-volatile memory may include a read-only memory (ROM), a programmable ROM (PROM), an erasable programmable PROM (EPROM), an electrically erasable programmable ROM (EEPROM), or a flash memory. The volatile memory may include a random-access memory (RAM), which is used as an external cache. With illustrative but not restrictive illustrations, many forms of RAM are available, for example, a static RAM (SRAM), a dynamic ROM (DRAM), a synchronous DRAM (SDRAM), a double data date SDRAM (DDR SDRAM), an enhanced SDRAM (ESDRAM), a Synchlink DRAM (SLDRAM) and a direct RAMBUS RAM (DR RAM).

In the above embodiments, it may be realized in whole or in part by software, hardware, firmware, or any combination thereof. When implemented using software, it may be implemented in whole or in part in a form of a computer program product. The computer program product includes one or more computer instructions. When the computer instructions are loaded and executed on a computer, a process or function described in the embodiments of the present disclosure is produced in whole or in part. The computer may be a general-purpose computer, a specialized computer, a computer network, or another programmable apparatus. The computer instructions may be stored in a computer-readable storage medium, or transmitted from a computer-readable storage medium to another computer-readable storage medium, for example, the computer instructions may be transmitted from a website site, computer, server or data center to another website site, computer, computer, server or data center by a wired (e.g., coaxial cable, optical fiber, data subscriber line (DSL)) or wireless (e.g., infrared, Bluetooth, microwave, etc.) manner. The computer-readable storage medium may be any available medium that the computer can access, or may be a data storage device such as a server, a data center, etc., which is integrated with one or more available medium. The available medium may be magnetic medium (e.g., floppy disk, hard disk, magnetic tape), optical medium (e.g., digital versatile disc (DVD)) or semiconductor medium (e.g., solid state disk (SSD)) and the like. It should note that the computer-readable storage medium referred to in the present disclosure may be non-volatile storage medium, in other words, non-transient storage medium.

Those having ordinary skills in the art may understand that all or part of the steps to realize the above embodiment may be completed by hardware, or by instructing related hardware by a program, and the program may be stored in a computer-readable storage medium, and the storage medium mentioned above may be a read-only memory, a disk or an optical disc, etc.

In descriptions to the embodiments of the present disclosure, descriptions referring to terms "an embodiment", "some embodiments", "an example", "a specific example", or "some examples" or the like mean that specific features, structures, materials, or features described in the embodiment(s) or example(s) are included in at least one embodiment or example of the present disclosure. Furthermore, the specific features, structures, materials, or features described may be combined in an appropriate manner in any one or more embodiments or examples. In addition, without contradicting each other, those having skills in the art may combine and integrate different embodiments or examples described in this Description and features of the different embodiments or examples.

In the descriptions to the embodiments of the present disclosure, unless otherwise indicated, "/" means "or", for example, A/B may mean A or B. The word "and/or" herein is merely an associated relationship for describing associated objects, which indicates that there may be three kinds of relationships, for example, A and/or B may mean that there are three cases: A alone, both A and B, and B alone.

In the descriptions to the embodiments of the present disclosure, terms "first" and "second" are used only for a descriptive purpose and should not be construed as indicating or implying relative importance or implying the number of technical features indicated. Thus, features defined with the terms "first" and "second" may explicitly or implicitly include one or more of these features. In the descriptions to the embodiments of the present disclosure, unless otherwise specified, "a/the plurality of" means two or more of them.

The foregoing is only exemplary embodiments of the present disclosure, but is not used to limit the present disclosure, and all changes, substitutions and improvements within the scope of the present disclosure should be included in the protection scope of the present disclosure.

## Claims

1. A system for controlling automatic transit of a yarn spindle, **characterized in that** the system for controlling the automatic transit of the yarn spindle comprises a manufacturing execution system, MES, a first programmable logic controller, PLC, and a plurality of second PLCs, wherein the plurality of second PLCs each is connected to the first PLC, each of the plurality of second PLCs is connected to at least one workstation, the first PLC is connected to the MES, wherein,
the first PLC is configured to acquire second service data of a target workstation from the second PLCs, obtain first service data of the target workstation based on the second service data, and send the first service data to the MES in a case where a control button of the first PLC is in an online mode and communication between the first PLC and the MES is normal;
the MES is configured to determine first transit indication information for the target workstation based on the first service data, and send the first transit indication information to the first PLC;
the first PLC is configured to analyze the first transit indication information to obtain an analysis result and return the analysis result to a second PLC corresponding to the target workstation; and
the second PLC corresponding to the target workstation is configured to control the target workstation to perform a yarn spindle transit task based on the analysis result.

2. The system of claim 1, **characterized in that** the second PLC corresponding to the target workstation is configured to:
notify a transit device or directly control the transit device to transfer the yarn spindle which has been processed by the target workstation to a next workstation of the target workstation in a case where the analysis result is transit permission; and
notify the transit device and directly control the transit device to prohibit the target workstation to perform the yarn spindle transit task and resend the second service data with respect to the target workstation in a case where the analysis result is transit prohibition.

3. The system of claim 1, **characterized in that** the MES is further configured to:
analyze the first service data to acquire target string data corresponding to the target workstation; and
determining whether the yarn spindle of the target workstation satisfies a transit condition based on target string data; determining the first transit indication information as transit permission if the transit condition is satisfied; and determining the first transit indication information as transit prohibition if the transit condition is not satisfied.

4. The system of claim 1, **characterized in that** the second PLC is further configured to: record a compulsory transit variable being equal to 1 in the second service data in a case where it detects that a control button corresponding to the target workstation is switched to a manual mode, wherein the compulsory transit variable being equal to 1 represents that the target workstation requests compulsory transit;
the first PLC is further configured to: record the compulsory transit variable being equal to 1 in the first service data corresponding to the target workstation in the case where the control button of the first PLC is in the online mode and the communication between the first PLC and the MES is normal;
the MES is further configured to: determine second transit indication information for the target workstation based on the compulsory transit variable if it detects that the first service data comprises the compulsory transit variable being equal to 1, wherein the second transit indication information is transit permission; and
the first PLC is further configured to: send an analysis result with respect to the second transit indication information to the second PLC in a case where the first PLC receives the second transit indication information, for controlling, by the second PLC, the target workstation to perform the yarn spindle transit task based on the analysis result.

5. The system of claim 1, **characterized in that** the first PLC is further configured to:
acquire the second service data of the target workstation from the second PLC in a case where the control button of the first PLC is in an offline mode or the communication between the first PLC and the MES is interrupted, obtain the first service data of the target workstation based on the second service data, record the first service data, directly generate third transit indication information for the target workstation, and send the third transit indication information to the second PLC, for controlling, by the second PLC, the target workstation to perform the yarn spindle transit task based on the third transit indication information, the third transit indication information is transit permission.

6. The system of claim 5, **characterized in that** the first PLC is further configured to:
generate offline data based on the first service data in the case where the control button of the first PLC is in the offline mode or the communication between the first PLC and the MES is interrupted, wherein the offline data comprises a transit record which needs to be synchronized to the MES; and
synchronize the offline data to the MES in a case where the control button of the first PLC is switched from the offline mode to the online mode and the communication between the first PLC and the MES is restored.

7. A method for controlling automatic transit of a yarn spindle, applied to a system for controlling the automatic transit of the yarn spindle, **characterized in that** the system for controlling the automatic transit of the yarn spindle comprises a manufacturing execution system, MES, a first programmable logic controller, PLC, and a plurality of second PLCs, wherein the plurality of second PLCs each is connected to the first PLC, each of the plurality of second PLCs is connected to at least one workstation, the first PLC is connected to the MES, wherein, the method for controlling the automatic transit of the yarn spindle comprises:
acquiring (S501), by the first PLC, second service data of a target workstation from the second PLCs, in a case where a control button of the first PLC is in an online mode and communication between the first PLC and the MES is normal, sending (S502) first service data of the target workstation obtained based on the second service data to the MES, for performing a determining process of an online transit condition based on the first service data and returning first transit indication information to the first PLC by the MES, the first transit indication information is transit permission or transit prohibition;
sending (S503) an analysis result with respect to the first transit indication information to a second PLC in a case where the first PLC receives the first transit indication information, for controlling, by the second PLC, the target workstation to perform a yarn spindle transit task based on the analysis result.

8. The method of claim 7, **characterized in that** the method for controlling the automatic transit of the yarn spindle further comprises:
recording (S601), by the second PLC, a compulsory transit variable being equal to 1 in the second service data in a case where the second PLC detects that a control button corresponding to the target workstation is switched to a manual mode, wherein the compulsory transit variable being equal to 1 represents that the target workstation requests compulsory transit;
recording (S602), by the first PLC, the compulsory transit variable being equal to 1 in the first service data corresponding to the target workstation in the case where the control button of the first PLC is in an online mode and communication between the first PLC and the MES is normal;
detecting (S603), by the MES, that the first service data comprises the compulsory transit variable being equal to 1, directly determining second transit indication information for the target workstation based on the compulsory transit variable, without performing the determining process of the online transit condition, wherein the second transit indication information is the transit permission; and
sending (S604), by the first PLC, an analysis result with respect to the second transit indication information to the second PLC in a case where the first PLC receives the second transit indication information, for controlling, by the second PLC, the target workstation to perform the yarn spindle transit task based on the analysis result.

9. The method of claim 7 or 8, **characterized in that** the determining process of the online transit condition comprises:
determining whether the yarn spindle of the target workstation satisfies a transit condition based on target string data corresponding to the target workstation; determining the first transit indication information is the transit permission if the transit condition is satisfied; and determining the first transit indication information is the transit prohibition if the transit condition is not satisfied, the target string data is obtained by analyzing the first service data by the MES.

10. The method of claim 7, **characterized in that** the method for controlling the automatic transit of the yarn spindle further comprises:
acquiring (S701), by the first PLC, the second service data of the target workstation from the second PLC in a case where the control button of the first PLC is in an offline mode or the communication between the first PLC and the MES is interrupted, obtaining the first service data of the target workstation based on the second service data, recording (S702) the first service data, and directly generating third transit indication information for the target workstation; and
sending (S703) the third transit indication information to the second PLC, for controlling, by the second PLC, the target workstation to perform the yarn spindle transit task based on the third transit indication information, the third transit indication information is the transit permission.

11. The method of claim 10, **characterized in that** the method for controlling the automatic transit of the yarn spindle further comprises:
generating, by the first PLC, offline data based on the first service data, in the case where the control button of the first PLC is in the offline mode or the communication between the first PLC and the MES is interrupted, wherein the offline data comprises a transit record which needs to be synchronized to the MES; and
synchronizing the offline data to the MES in a case where the control button of the first PLC is switched from the offline mode to the online mode and the communication between the first PLC and the MES is restored.

12. A non-transitory computer-readable storage medium storing a computer instruction thereon, wherein the computer instruction is used to cause a computer to execute the method of any one of claims 7 to 11.
